Europäisches Patentamt

European Patent Office

Office européen des brevets

(11) Publication number: 0 486 982 A1

# EUROPEAN PATENT APPLICATION

(21) Application number: 91119607.9

(22) Date of filing: 18.11.91

(51) Int. Cl.⁵: G03C 1/89, C09K 3/16, H01B 1/12

(30) Priority: 22.11.90 IT 2215690

(43) Date of publication of application:
27.05.92 Bulletin 92/22

(84) Designated Contracting States:
BE DE FR GB NL

(71) Applicant: MINNESOTA MINING AND
MANUFACTURING COMPANY
3M Center, P.O. Box 33427
St. Paul, Minnesota 55133-3427(US)

(72) Inventor: Valsecchi, Alberto
3M Italia Ricerche S.p.A.
I-17016 Ferrania (Savona)(IT)
Inventor: Hall, Kevin P.
Minnesota 3M Research Ltd., The Pinnacles
Harlow, Essex CM19 5AE(GB)
Inventor: Rolleri, Giuseppe
3M Italia Richerche S.p.A.
I-17016 Ferrania (Savona)(IT)
Inventor: Hobson, Rachel
Minnesota 3M Research Ltd., The Pinnacles
Harlow, Essex CM19 5AE(GB)

(74) Representative: Checcacci, Giorgio
Porta, Checcacci & Botti Corso di Porta
Romana, 123
I-20122 Milano(IT)

(54) Antistatic film bases and photographic elements comprising said antistatic film bases.

(57) Polymeric film bases at least one side of which is coated with an antistatic layer comprising the reaction product of (a) a water-soluble, electrically conductive polymer containing carboxylic groups and (b) a polyfunctional epoxide crosslinking agent, and photographic elements comprising said film bases.

EP 0 486 982 A1

FIELD OF THE INVENTION

The present invention relates to photographic film bases which are provided with antistatic layers, and to light-sensitive photographic elements comprising said film bases

BACKGROUND OF THE ART

The use of polymeric film bases for carrying photographic layers is well known. In particular, photographic elements which require accurate physical characteristics use polyester film bases, such as poly(ethylene terephthalate) film bases. In fact, polyester film bases, when compared with commonly used cellulose ester film bases, are dimensionally more stable and more resistant to mechanical stresses under any employement conditions.

It is known that the formation of static electric charges on the film base is a serious problem in the production of photographic elements. While coating the light-sensitive photographic emulsion, electric charges accumulated on the base discharge, producing light which is recorded as an image on the light-sensitive layer. Other drawbacks which result from the accumulation of electric charges on polymeric film bases are the adherence of dust and dirt and coating defects.

Additionally, photographic elements comprising light-sensitive layers coated onto polymeric film bases, when used in rolls or reels which are mechanically wound and unwound or in sheets which are conveyed at high speed, tend to accumulate static charges and record the light generated by the static discharges.

The static-related damages may occur not only before the photographic element has been manufactured, exposed and processed, but also after processing when the photographic element including the image is used to reproduce or enlarge the image. Accordingly, it is desired to provide permanent antistatic protection, that is an antistatic protection which retains its effectiveness even after photographic processing.

Several techniques have been suggested to protect photographic elements from the adverse effects of static charges.

Matting agents, hygroscopic materials or electroconductive polymers have been proposed to prevent static buildup, each acting with a different mechanism. However, matting agents cause haze, dust and dirt problems, hygroscopic materials cause sheets or films to stick together or with other surfaces, and electroconductive polymers are not permanent after photographic processing or are not transparent when coated with conventional binders.

US 4,225,665 purports to disclose permanent antistatic layers for photographic elements. Said layers consist essentially of three components: (1) a water-soluble, electrically conductive polymer comprising carboxylic groups, (2) a hydrophobic polymeric binder containing carboxylic groups, and (3) a polyfunctional aziridine crosslinking agent. This compositon, however, does not give clear coatings, does not survive photographic processing and causes premature reactions among the components prior to coating. US 4,701,403 suggests a costly system of coating the components as two separate coatings to avoid these premature reactions.

US 4,585,730 discloses a photographic element comprising a film base, a silver halide emulsion on one side of the support, and an antistatic layer on the other side of said support, wherein the antistatic layer is coated with an auxiliary gelatin layer containing a conductive polymer, whereby the antistatic properties of the antistatic layer are conducted through said auxiliary layer. Reference is made to US 4,225,665 and 4,701,403 as useful antistatic layers to be coated with the auxilary layer according to US 4,585,730. Said two layer construction, however, often suffers from poor adhesion between the two layers during photographic processing.

Accordingly, the application to light-sensitive photographic materials of antistatic compositions is very difficult and there is a continous need for providing permanent antistatic protection which do not affect the other necessary characteristics of the material.

SUMMARY OF THE INVENTION

In one embodiment, the invention is directed to a polymeric film base at least one side of which is coated with an antistatic layer comprising the reaction product of (a) a water-soluble, electrically conductive polymer containing carboxylic groups and (b) a polyfunctional epoxide crosslinking agent.

In a specific embodiment, the invention is directed to a photographic element comprising a polymeric film base, a silver halide emulsion layer on said film base, and an antistatic layer which comprises the reaction product of (1) a water-soluble, electrically conductive polymer containing carboxylic groups and (2) a polyfunctional epoxide crosslinking agent. This antistatic layer may be present as a backing layer on the side of the film base opposite the silver halide emulsion layer, as a subbing layer between the film base and the emulsion layer in a single or double side coated photographic element, and/or as a subbing layer between the film base and a different backing layer.

## DETAILED DESCRIPTION OF THE INVENTION

The present invention comprises an antistatic film base particularly useful for imaging media, especially silver halide photographic media. The film base comprises a polymeric substrate such as a polyester, and especially such as polyethyleneterephthalate. Other useful polymeric substrates include cellulose acetates, polyolephins, polycarbonates and the like. The film base has an antistatic layer adhered to one or both major surfaces of the base. A primer layer or subbing layer may be used between the base itself and the antistatic layer as it is known in the art. Priming and subbing layers are, in fact, generally considered to be part of the base itself unless specifically excluded in the description (e.g., unsubbed polyester). Primer and subbing compositions are well known in the art and polymers of vinylidene chloride often comprise the primer composition of choice for photographic elements.

The antistatic layer of the present invention comprises the reaction product of (a) a water-soluble electrically conductive polymer having carboxylic groups and (b) a polyfunctional epoxide crosslinking agent.

The component (a) of the antistatic layer of the present invention is preferably a water-soluble (e.g., soluble in water at room temperature for at least 5% in weight, preferably for at least 10%) electrically conductive hydrophilic copolymer having monomer units comprising:

(a') a $-SO_3M$ substituted ethylenically unsaturated monomer where M is $H^+$, $NH_4^+$, metal$^+$ or $N(R)_4^+$ where R is an alkyl group having 1-4 carbon atoms, and

(b') an ethylenically unsaturated comonomer containing carboxylic groups, the molar ratio of (a') to (b') preferably being 1:1 to 5:1, and optionally

(c') another ethylenically unsaturated monomer containing no free carboxylic groups.

More preferably, the component (a) is a copolymer of a styrene sulfonate and an ethylenically unsaturated comonomer containing carboxylic groups. Most preferably, the component (a) is a copolymer of sodium styrene sulfonate and maleic acid in a 2:1 to 4:1 mole ratio. The amount of units derived from electrically conductive monomers (a') serves to balance the requirements for antistatic protection with sufficient capability of the copolymer to become crosslinked through the carboxylic groups of units derived from monomers (b'). For example, monomer (a') may be styrene sulfonic acid, vinyltoluene sulfonic acid, $\alpha$-methyl-styrene sulfonic acid, 2-ethyl-styrene sulfonic acid, 3-acryloyloxypropane-1-sulfonic acid, 3-methacryloyloxypropane-1-sulfonic acid, 2-acrylamido-2-methylpropane-sulfonic acid, 3-methacryloyloxypropane-1-methyl-1-sulfonic acid, acryloylmethane-sulfonic acid, 4-acryloyloxybutane-1-sulfonic acid, 4-acryloyloxybutane-1-sulfonic acid, 2-acryloyloxyethane-1-sulfonic acid, 2-acrylamidopropane-1-sulfonicacid, 2-methacrylamido-2-methylpropane-1-sulfonic acid, 3-methacrylamido-3-methylbutane-1-sulfonic acid in the form of alkali metal salts thereof, preferably Na or K, or ammonium salts. Monomer (b') may be maleic acid, acrylic acid, methacrylic acid, 2-butenoic acid. Monomer (c'), if present, is to be chosen so as not negatively affect the electrical conductivity, water solubility and crosslinking capability of the polymers according to the present invention. Examples of monomers (c') are ethylenic monomers (such as isoprene, 1,3-butadiene, vinyl chloride, ethylene, propylene), styrene type monomers (such as styrene, vinyltoluene, $\alpha$-methyl-styrene, 2-ethyl-styrene, 1-vinylnaphthalene), 2-alkenoic acid esters (such methyl, ethyl, propyl, butyl, hexyl esters of acrylic, methacrylic, $\alpha$-ethylacrylic, $\alpha$-propylacrylic, 2-butenoic acids), acrylamide monomers (such as acrylamide, N-methylacrylamide, N,N-dimethylacrylamide, N-butylacrylamide, Nchloromethyl-acrylamide) and vinyl acetate.

Examples of component (a) are poly(sodium styrene sulfonate - maleic acid), poly(sodium styrene sulfonate - methacrylic acid), poly(sodium styrene sulfonate - butyl acrylate - methacrylic acid), poly-(sodium-2-acrylamido-2-methyl-propanesulfonate - maleic acid) and the like. These components (a) may be purchased commercially or synthesized by copolymerizing the monomers as known in the art.

The component (b) of the antistatic layer of the present invention is a polyfunctional epoxide crosslinking agent, that is an organic compound, including a polymeric compound, containing at least two epoxide groups therein. Examples of component (b) are as follows: bis(2,3-epoxypropyl) ether, vinyl cyclohexene dioxide, ethylene bisglycidyl ether, bis(2,3-epoxypropylethyl) ether, hydroquinone bisglycidyl ether, resorcinol bisglycidyl ether, diepoxybutane, diepoxyhexane, bisglycidyl thioether, glycerol trisglycidyl ether, bisglycidyl malonic acid diethyl ester, bisglycidyl sulfone, N,N-bisglycidyl piperazine, trisglycidyl phosphate, 2,4,6-trisglycidyl cyanurate, oxalic acid bisglycidyl ester, succinic acid bisglycidyl ester, bis-(2,3-epoxypropyl)-methyl propyl ammonium p.toluene sulfonate, 1,5-pentane-bis(2,3-epoxypropyl diethyl ammonium methane sulfonate), 2-butyne-1,4-bis(2,3-epoxypropyl dimethyl ammonium perchlorate). These compounds are well known in the art as shown in US Patents Nos. 2,882,250, 3,047,394, 3,189,459, and in FR Patent No. 1,231,056. These compounds may be purchased commercially or sinthesized as taught in the above patents.

Prior to be provided on the polymeric base, the antistatic polymer (a) and the crosslinking agent (b) are dissolved in an aqueous solution. The aqueous coating composition including the componemts (a) and (b) may be coated onto any suitable polymeric photographic base, but the preferred base is polyethyleneterephthalate film which has been subbed with a layer of resin, or layers of resin and gelatin. The antistatic coating is usually provided in coating weight based on the dry weight of from 0.01 g/m$^2$ to 1 g/m$^2$. Lower coating weights usually provide less adequate antistatic protection and higher coating weights usually give less transparent layers. The coating may be performed by conventional coating techniques, such as, for example, air knife coating, gravure coating, doctor roller coating. The antistatic layer of the present invention may also contain other addenda which do not influence the antistatic properties and the crosslinking capability of the combination of components (a) and (b), such as, for example, matting agents, plasticizers, lubricants, surfactants, dyes, and haze reducing agents. The presence of binders is not required, but limited amounts (such as, for example, less than 20%, preferably less than 10% in weight based on the weight of component (a)), of binders, such as gelatin, may be added to the coating composition comprising components (a) and (b) to improve coating quality of the antistatic layer.

The reaction of (a) and (b) is effected by coating and drying of components (a) and (b) onto the polymeric substrate. Heating may be used to accelerate drying and/or the reaction of the components (curing) to form a permanent antistatic layer. Air temperatures of from 20 to 200°C are useful for the drying-curing step, while the preferred range is 50 to 160°C. Catalysts may also be used to speed up the reaction.

The reaction product of (a) and (b) is a crosslinked product, having three-dimensional bonding within the layer. The crosslinking helps provide a permanent antistatic layer which is water-resistant and keep low molecular weight materials within the component (a) from migrating out of the antistatic layer. Migration is reduced or eliminated into other photographic layers and/or into aqueous processing solutions by the tightening effect of the crosslinking on the internal structure of the antistatic layer.

The imaging elements useful in the present invention may be any of the well-known elements for imaging in the field of graphic arts, printing, medical and information systems. Silver halide, photopolymer, diazo, vesicular image-forming systems may be used, silver halide systems being preferred.

Typical imaging element constructions of the present invention comprise:

1. The film base with an antistatic layer on one surface and the photosensitive layer or layers, preferably photographic silver halide emulsion layer or layers, on the other surface of the film base. In this construction an auxiliary layer may or may not be present over the antistatic layer. Examples of auxiliary layers include backing gelatin protective layers and backing gelatin antihalation layers.

2. The film base with an antistatic layer on one surface and at least one photosensitive layer adhered to the same surface as the antistatic layer, over the antistatic layer.

3. The film base may have antistatic layers on both surfaces of the polymeric base and have at least one photosensitive layer on one or both sides of the film base, over said antistatic layers.

Examples of silver halide photographic elements applicable to this invention include black-and-white and color photographic elements.

The silver halide employed in this invention may be any of silver chloride, silver bromide, silver iodide, silver chlorobromide, silver chloroiodide, silver bromoiodide and silver chloroiodobromide.

The silver halide grains in the photographic emulsion may be regular grain having a regular crystal structure such as cube, octahedron, and tetradecahedron, or the spherical or irregular crystal structure, or those having crystal defects such as twin plane, or those having a tabular form, or the combination thereof.

As the binder or protective colloid for use in the photographic element, gelatin is advantageously used, but other hydrophilic colloid may be used such as gelatin substitutes, collodion, gum arabic, cellulose ester derivatives such as alkyl esters of carboxylated cellulose, hydroxy ethyl cellulose, carboxy methyl cellulose, synthetic resins, such as the amphoteric copolymers described in US Pat. No. 2,949,442, polyvinyl alcohol, and others well known in the art.

The photographic elements utilizing the antistatic layer of this invention have radiation-sensitive silver halide emulsion layers, i.e. silver halide emulsions sensitive to the visible or infrared light. The silver halide emulsions may be optically sensitized by any of the spectral sensitizers commonly used to produce the desired sensitometric characteristics.

Methods for making such elements, means for sensitizing them to radiation, use of additives such as chemical sensitizers, antifoggant and stabilizers, desensitizers, brightening agents, couplers, hardening agents, coating aids, plasticizers, lubricants, matting agents, high-boiling organic solvents, development accelerating compounds, antistatic agents, antistain agents, and the like are described for example, in Research Disclosure Vol. 176, No. 17643, December 1979, Sections I to XIV.

The following examples, which further illustrate the invention, report some experimental data obtained from processes and measurements which are of normal use in the art. The coating quality (opacity and uneveness) were evaluated by visual observation of the layer. Surface resistivity measurements were made using the following procedure: samples of each film were kept in a cell at 21°C and 25% R.H. for 24 hours and the electrical resistivity was measured by means of a Hewlett-Packard High Resistance Meter model 4329A. As far as the sticking is concerned, samples of each film were kept in contact with a conventional gelatin subbing under a load of 200 g and artificially aged for 3 days at 60°C. Subsequently, the two subbing surfaces were separated, visually examined and qualitatively evaluated for patterns (ferrotyping) due to the interaction between the antistatic layer under examination and the conventional gelatin subbing. The following examples also report four adhesion values: the first is the dry adhesion value and refers to the adhesion of the silver halide emulsion layers and of the auxiliary gelatin layers to the antistatic base prior to the photographic processing; the second and the third adhesion values are the wet adhesion values and refer to the adhesion of the above layers to the antistatic base during the photographic processing (developer and fixer); the fourth adhesion value is the dry adhesion value and refers to the adhesion of the above layers to the antistatic base after photographic processing. In particular, the dry adhesion was measured by tearing samples of the film, applying a 3M Scotch[R]brand 5959 Pressure Sensitive Tape along the tear line of the film and separating rapidly the tape from the film: the layer adhesion was evaluated according to a scholastic method giving a value of 2 when the whole layer was removed from the base and a value of 8 when no part thereof was removed from the base and intermediate values for intermediate situations. The wet adhesion was measured by drawing some lines with a pencil point to form an asterisk on the film just taken out from the processing bath and by rubbing on the lines with a finger. Also in this case the adhesion of the layers was evaluated according to a scholastic method by giving a value of 2 when the layers were totally removed from the base, a value of 8 when no portion thereof was removed and intermediate values for intermediate cases. As far as dynamic wettability is concerned, a drop of gelatin silver halide emulsion was put on the surface of the antistatic layer and the spreading of the drop surface was measured.

EXAMPLE 1

The following subbing compositions were prepared and coated onto a poly(ethylene terephthalate) film base (PET) resin-subbed on both sides with the terpolymer (vinylidene chloride-itaconic acid-methylmethacrylate) by the double roller coating technique and subsequent vertical drying (Coatings 1 to 4). A conventional gelatin subbing (coating 5) was used as a reference for trials evaluation. The amounts of the components reported in the following Table 1 are expressed in grams.

Table 1

| | Subbing Compositions | | | |
|---|---|---|---|---|
| | 1 | 2 | 3 | 4 |
| Sodium Styrenesulfonate-Maleic Acid (3:1 mole ratio) copolymer | 30.8 | 30.8 | 30.8 | 30.8 |
| Latex with 41% by weight of (styrenebutylacrylate-butylmethacrylate-methacrylic acid) copolymer (45:43:3 mole ratio) | 38.6 | 38.6 | / | / |
| Polyfunctionalaziridine (*) | 4.4 | / | 4.4 | / |
| Ethyleneglycol-Diglycidylether (EDGE) | / | 4.4 | / | 4.4 |
| Water | 925 | 925 | 965 | 965 |

(*)Pentaerythitol-tri-{$\beta$-(N-aziridinyl)-propionate}.

The following Table 2 reports the characteristics of the various coatings.

Table 2

| | Coatings | | | | |
|---|---|---|---|---|---|
| | 1 | 2 | 3 | 4 | 5 |
| Coating Quality: Opacity and Uneveness | Poor | Poor | Good | Good | Very good |
| **Surface Electrical Resistivity Ohm/sq 21°C 25% RH:** | | | | | |
| 7 days shelf ageing: | | | | | |
| - before processing | $8 \times 10^9$ | $6 \times 10^9$ | $8 \times 10^8$ | $1 \times 10^9$ | $7 \times 10^{14}$ |
| - after processing in 3M RDC5 Developer | $4 \times 10^{11}$ | $5 \times 10^{11}$ | $3 \times 10^{11}$ | $2 \times 10^{11}$ | $8 \times 10^{15}$ |
| 40 days shelf ageing: | | | | | |
| - before processing | | | $6 \times 10^8$ | $9 \times 10^8$ | $8 \times 10^{14}$ |
| after processing in 3M RDC5 Developer | | | $1 \times 10^{12}$ | $1 \times 10^{11}$ | $7 \times 10^{15}$ |
| **Sticking vs. Coating 5 3 days 60°C 75% RH, 200 gr. load:** ferrotyping evaluation | | | very poor | fair | poor |
| **Dynamic wettability:** photoemulsion droplet expansion mm² /sec | | | 50 | 73 | 40 |

The subbing containing the hydrophobic binder in the form of latex exibits uneven opacity and sagging.

The subbing containing EGDGE as cross-linking agent is dramatically better than that containing aziridine for antistatic properties stability, sticking tendency and dynamic wettability.

EXAMPLE 2

The subbing coatings 3, 4 and 5 of example 1 were overcoated with a conventional gelatin antihalation layer containing antihalation dyes, a surfactant and a hardener and with a protective layer containing a matting agent, a surfactant and a hardener (Coatings 6, 7 and 8, respectively). The two layers were coated at approximately pH 6. The total gelatin g/m$^2$ is 4.5 and the thickness is approximately 4.5 micrometers. A conventional black-and-white silver halide photographic emulsion was coated on the opposite side of each coating. The characteristics of the coatings are reported in the following Table 3.

Table 3

| | Coatings | | |
|---|---|---|---|
| | 6 | 7 | 8 |

Surface Electrical Resistivity
Ohm/sq 21°C, 25% RH:
- before processing $\quad$ $2\text{x}10^{10}$ $\quad$ $3\text{x}10^{10}$ $\quad$ $1\text{x}10^{13}$
- after processing in 3M
  RDC5 Developer $\quad$ $9\text{x}19^{10}$ $\quad$ $8\text{x}10^{10}$ $\quad$ $1\text{x}10^{14}$

Adhesion(*)after 20 days shelf ageing:
- before processing $\quad$ 9 $\quad$ 8 $\quad$ 8
- in developer $\quad$ 2 $\quad$ 9 $\quad$ 10
- in fixer $\quad$ 2 $\quad$ 10 $\quad$ 10
- after processing $\quad$ 9 $\quad$ 9 $\quad$ 9

(*)Adhesion values are expressed in a scholastic rating in which the higher the number, the better the adhesion.

Both subbing layers (with EGDGE and aziridine) overcoated with the antihalation layer show good antistatic properties before and after processing. The subbing layer containing EGDGE as the cross-linking agent exibits superior adhesion (especially wet) of the antihalation layer compared with that of the layer containing aziridine.

EXAMPLE 3

The subbing layers of coatings 4 and 5 of example 1 were overcoated with a light-sensitive emulsion comprising a gelatino-silver chlorobromide emulsion having 96% mole Cl and 4% mole Br and having been brought to its optimum sensitivity with gold and sulfur. Conventional wetting agents, antifoggants, hardeners and coating aids were also added. The emulsion showed cubic grains with an average grain size in the range of 0.1-0.3 micrometers.

A hardened gelatin antiabrasion layer containing matting agent, and surfactant was coated thereon. The two gelatin layers were coated at 2.7 g/m$^2$ of silver and 4.5 g/m$^2$ of gelatin. The total thickness of the gelatin layers was in the range of 4-5 micrometers. A conventional antihalation layer as described in example 2 was coated on the opposite side. The photographic films 9 and 10 were respectively obtained. The following Table 4 reports the characteristics of the two films.

EP 0 486 982 A1

Table 4

```
                                                              F  i  l  m  s
                                                              9          10

Surface Electrical Resistivity
Ohm/sq 21°C, 25% RH
- before processing                                  2x10¹⁰     1x10¹³
- after processing in 3M RDC5 Developer  7x10¹⁰     7x10¹⁴


Adhesion after 20 days shelf ageing
(0-10 scale):
- before processing                                   10          10
- in developer                                        10          10
- in fixer                                            10          10
- after processing in 3M RDC5 Developer    7           6
```

Samples of the two films have been exposed with an UV lamp for 6 seconds, then processed in 3M RDC5 developer, fixed, washed and dried. The following Table 5 reports the sensitometric results.

Table 5

|              | Films |      |
|--------------|-------|------|
|              | 9     | 10   |
| D-min        | 0.04  | 0.04 |
| D-max        | 5.0   | 5.0  |
| Speed        | .37   | .37  |
| Toe contrast | 1.72  | 1.71 |
| Speed is expressed in log E measured at 1 above D-min. |||

Good antistatic properties, adhesion and sensitometric characteristics were obtained with film 9.

**Claims**

1. An antistatic film base comprising a polymeric substrate having on at least one surface thereof an antistatic layer comprising the reaction product of (a) a water-soluble electrically conductive polymer having carboxylic groups and (b) an organic crosslinking agent comprising at least two epoxide groups.

2. The film base of claim 1 wherein the polymeric substrate comprises polyethyleneterephthalate.

3. The film base of claim 2 wherein said antistatic layer is on only one side of said substrate.

4. The film base of claim 2 wherein said antistatic layer consists essentially of the reaction product of (a) and (b).

5. The film base of claim 3 wherein said antistatic layer consists essentially of the reaction product of (a)

9

and (b).

6. The film base of claim 1 wherein the carboxylic group containing polymer is a copolymer of sodium styrene sulfonic acid and maleic acid.

7. The film base of claim 1 wherein the antistatic layer has a coating weight of 0.01 $g/m^2$ to 1 $g/m^2$.

8. A photographic film comprising the film base of claim 1, having a silver halide emulsion layer adhered to at least one side of said film base.

9. The photographic film of claim 8 wherein said emulsion layer is on the same side of said film base as said antistatic layer.

10. The photographic film of claim 8 wherein said emulsion layer is on the opposite side of said film base as said antistatic layer.

11. the photographic film of claim 10 wherein an auxiliary gelatin layer is adhered to said antistatic layer.

12. A photographic film comprising the film base of claim 2 having a silver halide emulsion layer adhered to at least one side of said film base.

13. The photographic film of claim 12 wherein said emulsion layer is on the same side of said film base as said antistatic layer.

14. The photographic film of claim 12 wherein said emulsion layer is on the opposite side of said film base as said antistatic layer.

15. The photographic film of claim 14 wherein an auxiliary gelatin layer is adhered to said antistatic layer.

16. A photographic film comprising the film base of claim 3 having a silver halide emulsion layer adhered to at least one side of said film base.

17. The photographic film of claim 16 wherein said emulsion layer is on the same side of said film base as said antistatic layer.

18. The photographic film of claim 16 wherein said emulsion layer is on the opposite side of said film base as said antistatic layer.

19. The photographic film of claim 18 wherein an auxiliary gelatin layer is adhered to said antistatic layer.

20. A photographic film comprising the film base of claim 4 having a silver halide emulsion layer adhered to at least one side of said film base.

21. The photographic film of claim 20 wherein said emulsion layer is on the same side of said film base as said antistatic layer.

22. The photographic film of claim 20 wherein said emulsion layer is on the opposite side of said film base as said antistatic layer.

23. The photographic film of claim 22 wherein an auxiliary gelatin layer is adhered to said antistatic layer.

24. The photographic film of claim 8 wherein the carboxylic group containing polymer is a copolymer of sodium styrene sulfonic acid and maleic acid.

25. The photographic element of claim 8 wherein the antistatic layer has a coating weight of 0.01 $g/m^2$ to 1 $g/m^2$.

26. The photographic film of claim 8 wherein the antistatic layer is a subbing layer under at least one silver halide emulsion layer coated on one or both sides of the film base.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3 446 651 (M.C.CLACHAN)<br>* claims 1,10 *<br>--- | 1-26 | G03C1/89<br>C09K3/16<br>H01B1/12 |
| X | US-A-3 206 312 (M.D.STERMAN)<br>* column 7, line 43 - line 48 *<br>--- | 1-5 | |
| X | US-A-4 459 352 (R.T.JONES ET AL)<br>* example 1 *<br>--- | 1-3 | |
| X | EP-A-0 386 529 (KONICA CORPORATION)<br>* page 13, line 53 - page 15, line 19 *<br>* claims 1,10 *<br>--- | 1-3 | |
| X | EP-A-0 251 531 (ICI PLC)<br>* page 3, line 14 - line 57 *<br>--- | 1-4 | |
| A | EP-A-0 300 376 (E.I.DU PONT DE NEMOURS AND CO.)<br>* abstract *<br>* page 3, line 37 - line 38 *<br>--- | 1 | |
| P,X | EP-A-0 430 110 (KONICA CORPORATION)<br>* claims 1,13,15 * | 1-26 | TECHNICAL FIELDS SEARCHED (Int. Cl.5 )<br><br>G03C |

The present search report has been drawn up for all claims

| Place of search | Date of completion of the search | Examiner |
|---|---|---|
| THE HAGUE | 21 FEBRUARY 1992 | BOLGER W. |